(19) Europäisches Patentamt / European Patent Office / Office européen des brevets

(11) **EP 3 869 472 A1**

(12) **EUROPEAN PATENT APPLICATION**


(43) Date of publication:
**25.08.2021 Bulletin 2021/34**

(21) Application number: **21157867.9**

(22) Date of filing: **18.02.2021**

(51) Int Cl.:
*G07D 7/00* (2016.01) *G06K 9/00* (2006.01)
*G06K 9/34* (2006.01) *G06K 9/62* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 US 202062979605 P**



(71) Applicant: **Accenture Global Solutions Limited**
**Dublin 4 (IE)**

(72) Inventors:
- **MCCLELLAN, Christopher J.**
  **Grove City, OH Ohio 43123 (US)**
- **KELLER, Matthew Francis**
  **Columbus, Ohio 43315 (US)**
- **MACGREGOR, Johnathan David**
  **Columbus, OH Ohio 13223 (US)**

(74) Representative: **Swindell & Pearson Limited**
**48 Friar Gate**
**Derby DE1 1GY (GB)**


(54) **DETECTING IDENTIFICATION TAMPERING USING ULTRA-VIOLET IMAGING**


(57) Implementations of the present disclosure include applying UV light to a first target identification, generating a first UV image of the first target identification, and determining that a model brightness fingerprint is unavailable for the first target identification, and in response: calculating a region brightness value for a particular region of the first target identification based on the first UV image, calculating an identification brightness value for the first target identification based on the first UV image, and comparing the region brightness value to the identification brightness value to determine whether the first target identification has been tampered with.

100
102
DRIVING LICENSE
ENHANCED
ID: 123 456 789
Class: M,C
McDrivalot,
Drivey
123 Main St.
Anytown, USA 12345
DOB: 1973-08-08
Sex: M
DMcDrivalot


FIG. 1A



Printed by Jouve, 75001 PARIS (FR)

## Description

CROSS-REFERENCE TO RELATED APPLICATIONS

This application claims priority to U.S. 62/979,605, filed on February 21, 2020, the disclosure of which is expressly incorporated herein by reference in the entirety.

BACKGROUND

Automated systems have been developed that enable provisioning of goods and/or services to individuals based on authentication of identity. For example, automated systems can image an identification (e.g., driver's license, passport, corporate ID, university ID, etc.) to determine whether the person submitting the identification is the same person represented in the identification.

By way of non-limiting example, vending machines enable provisioning of goods and/or services to customers. In some instances, goods and/or services requested by customers can be restricted. For example, a customer may be required to be of a minimum age and/or have appropriate licensing, credentials, or other approval (e.g., prescription) to obtain particular goods and/or services. Using alcohol as a non-limiting example, a customer may be required to be at least 21 years of age to purchase and consume alcoholic beverages. Using tobacco as another non-limiting example, a customer may be required to be at least 18 years of age to purchase tobacco products. Using rental vehicles as still another non-limiting example, access to a rental vehicle can be limited to customers having a valid driver license and being of at least a certain age (e.g., 18 years old, 24 years old).

While automated systems, such as vending machines, provide numerous advantages, provisioning of identity-restricted goods and/or services requires particular functionality in order to be fully automated. For example, the automated system itself is required to authenticate documentation provided by the customer (e.g., license, passport, identification, prescription) as well as the customer (e.g., verify that the customer requesting the goods/services matches the person associated with the documentation). Although systems have been developed to perform such functionality, traditional systems can suffer from disadvantages. For example, a common and easily performed technique for tampering with an identification that includes a photo of the person represented by the identification (e.g., driver's license, passport, corporate ID, university ID, etc.) is to tape a photo of another person on top of the existing photo. In some instances, automated systems for verifying that the owner of the identification is the same person submitting the identification for verification cannot determine that the original photo has been obscured.

SUMMARY

Implementations of the present disclosure are generally directed to detecting tampering of identifications. More particularly, implementations of the present disclosure are directed to using ultra-violet (UV) light to detect instances of tampering of identifications. As described in further detail herein, implementations of the present disclosure determine a brightness fingerprint for a target identification by imaging the target identification under UV light. In some implementations, the brightness fingerprint is determined based on an image of the target identification. If a model brightness fingerprint is not available, a value of a particular region of the target identification is compared to a value of the target identification to detect whether the target identification has been tampered with. In some examples, the values are determined based on a brightness fingerprint of the particular region and the brightness fingerprint of the target identification, respectively. In some implementations, if a model brightness fingerprint for the target identification is available, a value of the target identification is compared to a critical value to detect whether the target identification has been tampered with. In some examples, the value is determined based on the brightness fingerprint of the target identification, and the critical value is determined based on the model brightness fingerprint.

In some implementations, actions include applying UV light to a first target identification, generating a first UV image of the first target identification, and determining that a model brightness fingerprint is unavailable for the first target identification, and in response: calculating a region brightness value for a particular region of the first target identification based on the first UV image, calculating an identification brightness value for the first target identification based on the first UV image, and comparing the region brightness value to the identification brightness value to determine whether the first target identification has been tampered with. Other implementations of this aspect include corresponding systems, apparatus, and computer programs, configured to perform the actions of the methods, encoded on computer storage devices.

These and other implementations can each optionally include one or more of the following features: actions further include generating a brightness fingerprint for the first target identification based on the first UV image, and providing the model brightness fingerprint at least partially based on the brightness fingerprint; the particular region includes a photo region including an image provided in the first target identification; determining that a model brightness fingerprint is unavailable for the first target identification includes: determining an identification type of the first target identification, indexing a table of model brightness fingerprints using the identification type, and determining that the table is absent the identification type; actions further include determining that the first target identification has been tampered with in response to the region brightness value being greater than or equal to the identification brightness value; actions further include determining that the first target identification has not been tampered with in response to the region brightness value being less than the identification brightness value; the region brightness value is calculated as a mean brightness value across all pixels in the particular region depicted within the first UV image; actions further include: applying UV light to a second target identification, generating a second UV image of the second target identification, and determining that the model brightness fingerprint is available for the second target identification, and in response, generating a brightness fingerprint for the second target identification, determining a value for the second target identification based on the brightness fingerprint and the model brightness fingerprint, and comparing the value to a threshold value to determine whether the second target identification has been tampered with; the brightness fingerprint includes a brightness histogram of the second target identification based on the second UV image of the second target identification; and the model brightness fingerprint is provided as a histogram of brightness values of a set of UV images of a set of known valid identifications.

It is appreciated that methods in accordance with the present disclosure can include any combination of the aspects and features described herein. That is, for example, apparatus and methods in accordance with the present disclosure are not limited to the combinations of aspects and features specifically described herein, but also may include any combination of the aspects and features provided.

The details of one or more implementations of the present disclosure are set forth in the accompanying drawings and the description below. Other features and advantages of the present disclosure will be apparent from the description, drawings, and claims.

## BRIEF DESCRIPTION OF DRAWINGS

FIG. 1A depicts a non-tampered identification.

FIG. 1B depicts a tampered identification.

FIGs. 2A and 2B respectively depict representations of the non-tampered identification of FIG. 1A and the tampered identification of FIG. 1B under ultra-violet (UV) light.

FIG. 3 depicts an example histogram of UV brightness in accordance with implementations of the present disclosure.

FIG. 4 depicts an example process in accordance with implementations of the present disclosure.

Like reference numbers and designations in the various drawings indicate like elements.

## DETAILED DESCRIPTION

Implementations of the present disclosure are generally directed to detecting tampering of identifications. More particularly, implementations of the present disclosure are directed to using ultra-violet (UV) light to detect instances of tampering of identifications. As described in further detail herein, implementations of the present disclosure determine a brightness fingerprint for a target identification by imaging the target identification under UV light. In some implementations, the brightness fingerprint is determined based on an image of the target identification. If a model brightness fingerprint is not available, a value of a particular region of the target identification is compared to a value of the target identification to detect whether the target identification has been tampered with. In some examples, the values are determined based on a brightness fingerprint of the particular region and the brightness fingerprint of the target identification, respectively. In some implementations, if a model brightness fingerprint for the target identification is available, a value of the target identification is compared to a critical value to detect whether the target identification has been tampered with. In some examples, the value is determined based on the brightness fingerprint of the target identification, and the critical value is determined based on the model brightness fingerprint.

Implementations of the present disclosure are described in further detail herein with reference to an example automated system. The example automated system includes a vending machine, and more particularly, a vending machine that dispenses restricted products (e.g., age restricted). In the example described herein, the vending machine is a beverage vending machine that dispenses alcoholic beverages (e.g., beverages restricted to persons aged 21 and above). It is contemplated, however, that implementations of the present disclosure can be realized with any appropriate automated system.

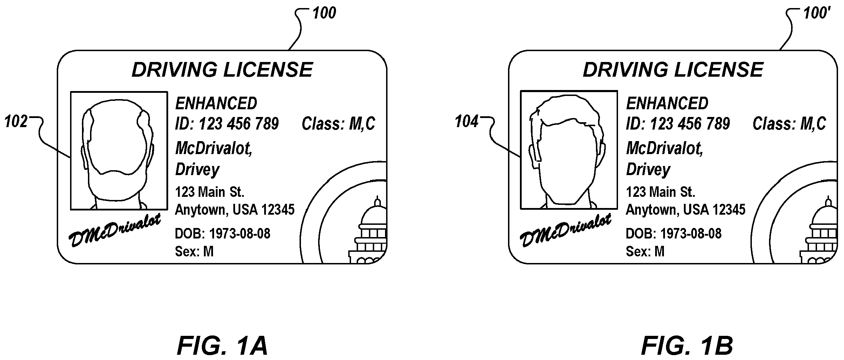

FIG. 1A depicts a non-tampered identification 100. In the example of FIG. 1A, the non-tampered identification 100 is provided as a driver's license. It is contemplated, however, that implementations of the present disclosure can be realized with any appropriate identification including, without limitation, driver's licenses, passports, corporate IDs, university IDs, and the like. It is also contemplated that implementations of the present disclosure can be realized with identifications that are absent an image of a person represented by the identification. That is, implementations of the present disclosure can be used to detect tampering of identifications, regardless of whether they are photo-based identifications.

In the example of FIG. 1A, the non-tampered identification 100 includes an image 102, which depicts the person represented by the non-tampered identification 100. The non-tampered identification 100 further includes personal information (e.g., name, address, birthdate, sex) of the person represented by the non-tampered identification 100, as well as license information (e.g., type of license, identification number, class(es) of license).

FIG. 1B depicts a tampered identification 100'. In the example of FIG. 1B, the tampered identification 100' is provided as the non-tampered identification 100 with an image 110 obscuring the image 102 seen in FIG. 1A. The remainder remains untampered.

Although FIGs. 1A and 1B depict tampering based on obscuring an image with another image, it is contemplated that implementations of the present disclosure can be realized with other types of tampering. For example, tampering can be achieved by obscuring text on the identification (e.g., covering a birthdate with text indicating an earlier birthdate).

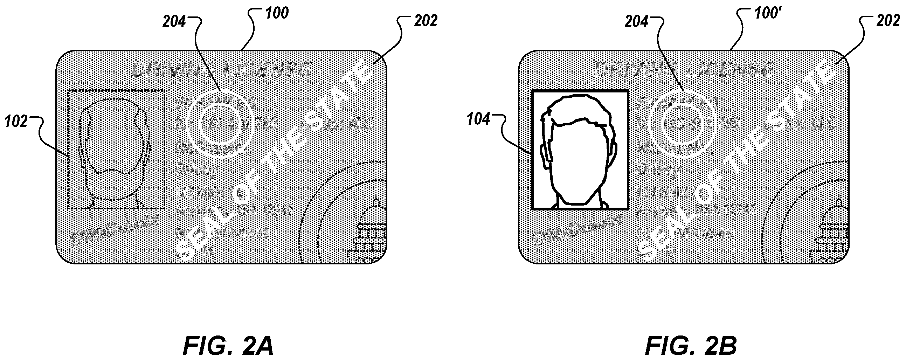

As introduced above, implementations of the present disclosure are directed to using UV light to detect instances of tampering of identifications. More particularly, and as described in further detail herein, an identification is imaged under UV light and a brightness fingerprint for the identification is determined based on the image. FIGs. 2A and 2B respectively depict representations of the non-tampered identification 100 of FIG. 1A and the tampered identification 100' of FIG. 1B under UV light. As represented in FIGs. 2A and 2B, application of UV light to an identification results in portions of the identification being brighter than other portions of the identification. In the example of FIGs. 2A and 2B, watermarks 202, 204 become visible. In the example of FIG. 2A, while the watermarks 202, 204 are brightened and become visible under UV light, a remainder of the non-tampered identification is dimmed including the image 102. In the example of FIG. 2B, the watermarks 202, 204 and the image 104 are brightened under UV light, and a remainder of the tampered identification 100' is dimmed.

In accordance with implementations of the present disclosure, in assessing whether a target identification has been tampered with, one or more images of the identification can be recorded. At least one image is recorded as UV light (e.g., with wavelength from 10 nm to 400 nm) is applied to the target identification (e.g., using a black light or UV lamp), which is referred to herein as a UV image. Another image can include an image of the target identification under visible light (e.g., with wavelength from 400 nm to 700 nm), which is referred to herein as an image.

In some implementations, the UV image is a digital image represented as data, the data providing values for each of a plurality of pixels that the UV image is composed of. In some examples, each pixel includes respective values for a blue channel, a green channel, a red channel, and an alpha channel, where alpha represents the opaqueness of the respective pixel (e.g., BGRa format). In some examples, the UV image is processed to convert the pixel values to another color space. An example color space includes the hue, saturation, value (HSV) color space. In some examples, the hue value represents the color of the respective pixel and is expressed as a number from 0 to 360 degrees (e.g., red falls between 0 and 60 degrees, yellow falls between 61 and 120 degrees, green falls between 121-180 degrees, cyan falls between 181-240 degrees, blue falls between 241-300 degrees, and magenta falls between 301-360 degrees). In some examples, the saturation value represents an amount of gray in the color of the respective pixel and can be provided in a range of 0 to 1, where 0 is gray and 1 is a primary color. In some examples, the value in HSV represents the brightness of the color of the respective pixel and can be provided in a range of 0 to 100 percent, where 0 is completely black and 100 is the brightest. Accordingly, the term value in HSV is referred to as brightness value herein.

In accordance with implementations of the present disclosure, it can be determined whether a model brightness fingerprint for the target identification (i.e., the identification presented to the automated system) is available. That is, a model brightness fingerprint can be provided for each type of identification that is usable by the automated system. By way of non-limiting example, the automated system can accept particular types of identification for age and identity verification (e.g., driving license, passport, green card) and not accept other types of identification (e.g., corporate ID, university ID). In some examples, the type of identification can include multiple sub-types. Example sub-types can include, without limitation, issuing authority (e.g., state, country) and year issued (e.g., identifications can change periodically). Accordingly, a type of identification can be provided as a type data set. An example type data set can include type, issuing authority, and year issued. For an example driving license, an example type data set can include: driving license, Ohio, 2018. For another example driving license, an example type data set can include: driving license, Ohio, 2015. For an example passport, an example type data set can include: passport, United States, 2015. For another example passport, an example type data set can include: passport, United Kingdom, 2018.

In some implementations, a table of model brightness fingerprints can be provided. In some examples, the type of identification can be determined and can be used to index the table. If a model brightness fingerprint for the type of identification is included in the table, it can be determined that a model brightness fingerprint is available. If a model brightness fingerprint for the type of identification is not included in the table, it can be determined that a model brightness fingerprint is available. For example, a first example identification can be presented to the automated system, and it can be determined that the first example identification is a driving license issued by the State of Ohio in 2018 (e.g., the type data set includes driving license, Ohio, 2018). It can be determined that the table includes an entry for driving license, Ohio, 2018, and consequently, a model brightness fingerprint is available. Data representative of the model brightness fingerprint, described in further detail herein, is retrieved for processing. As another example, a second example identification can be presented to the automated system, and it can be determined that the second example identification is a passport issued by the United States in 2015 (e.g., the type data set includes passport, United States, 2015). It can be determined that the table does not include an entry for passport, United States, 2015, and consequently, a model brightness fingerprint is not available.

In some implementations, the type data set for the target identification can be determined based on a machine-readable component provided on or in the target identification. Example machine-readable components can include a chip that electronically stores data (e.g., a vicinity Radio Frequency Identification (RFID) chip) and a machine-readable code (e.g., bar code, QR code). In some examples, the automated system can include an RFID reader that can read a type data set from an RFID chip of the target identification. In some examples, the automated system can include a scanner that enables the automated system to read a machine-readable code (e.g., bar code scanner, QR code scanner) to determine the type data set of the target identification. In some examples, the automated system can process an image that depicts a machine-readable code to decode the machine-readable code and determine the type data set of the target identification.

In some implementations, the type data set for the target identification can be determined by processing an image of the target identification. For example, the image can be processed using optical character recognition (OCR) to recognize text displayed on the target identification. Example text can include type of identification (e.g., driving license, passport), issuing authority, and date issued.

In some implementations, if a model brightness fingerprint is not available, a value of a particular region of the target identification (referred to herein as the region value ($x_{REG}$)) is compared to a value of the target identification (referred to herein as the ID value ($x_{ID}$)) to detect whether the target identification has been tampered with. In some examples, the particular region includes a photo region (e.g., a portion of the target identification that includes an image of the person purportedly represented by the target identification). In some examples, the values are each provided as a mean brightness value. That is, the region value is determined as a region mean brightness value across all pixels in the particular region of the UV image, and the ID value is determined as an ID mean brightness value across all pixels of the UV image. For example, the brightness values for all pixels in the region can be determined from the HSV data, described herein, and the region mean brightness value can be determined as the mean of the brightness values. The brightness values for all pixels in the target identification (including the region) can be determined from the HSV data, described herein, and the ID mean brightness value can be determined as the mean of the brightness values.

In some implementations, the region within the target identification can be determined based on a set of standard parameters for the particular type of the target identification. For example, identifications are produced to standards that define multiple requirements including, but not limited to, locations and sizes of content to be displayed on the identification. In some examples, sets of standard parameters can be stored in computer-readable memory and the set of standard parameters for the particular type of identification can be retrieved from the computer-readable memory.

In some examples, the set of standard parameters defines locations and sizes of content for the respective type of the identification. For example, the set of standard parameters can define coordinates for an origin of an image (e.g., lower left corner of the photo) that is displayed on the identification and a size of the image (e.g., height, width). Using this non-limiting example, the region is determined to start at the origin and extend across the size define in the set of standard parameters.

In some implementations, the region within the target identification can be determined using recognition. For example, the image of the target identification can be scanned using facial recognition to determine a location of a face within the target identification. A boundary (e.g., square, rectangle) can be defined around a face identified in the target identification, the boundary defining the region within the target identification.

In some implementations, the region value is compared to the ID value to determine whether the region value is greater than or equal to the ID value. If the region value is greater than or equal to the ID value, tampering of the target identification is indicated. That is, an indication is provided that the target identification has been tampered with. If the region value is not greater than or equal to the ID value, non-tampering of the target identification is indicated. That is, an indication is provided that the target identification has not been tampered with. In some examples, the indication can be provided as a value. For example, the indication can be provided as 0, which indicates that the target identification has not been tampered with, or can be provided as 1, which indicates that the target identification has been tampered with.

In some implementations, if a model brightness fingerprint for the type of the target identification is available, an ID value of the target identification is compared to a critical value to detect whether the target identification has been tampered with. In some implementations, the model brightness fingerprint for the type of the target identification is provided as a histogram of brightness values of UV images of a set of known valid identifications.

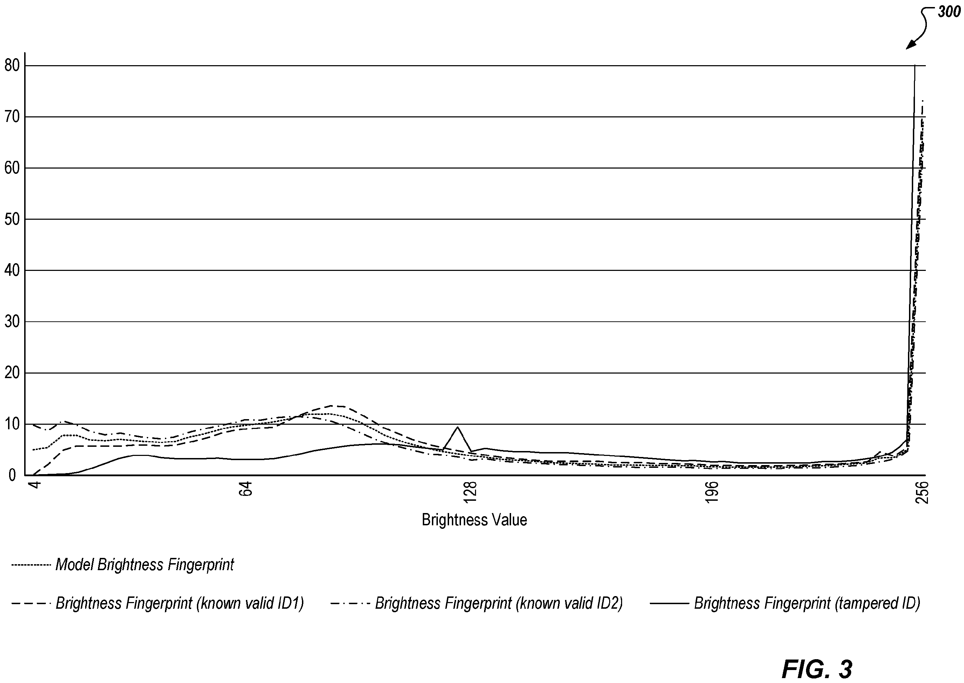

FIG. 3 depicts an example histogram 300 of UV brightness in accordance with implementations of the present disclosure. The example histogram 300 is provided based on brightness values of a set of known valid identifications. For example, an image of each of the known valid identifications is recorded as the known valid identification is under UV light, and HSV data is provided for each pixel of the image, as described herein. A histogram is generated for each known valid identification. In some examples, the histogram is generated based on a set of bins defined across a color spectrum. An example color spectrum can include, without limitation, 256 colors. In some examples, each bin has a width that can account for one or more colors of the color spectrum. For example, and without limitation, each bin can have a width of 4 colors, which results in provision of 64 bins (using the example color spectrum of 256 colors). Using bins having a width greater than a minimum value (e.g., 1) and less than a maximum value (e.g., 10), enables smoothing over small irregularities in brightness values of individual pixels without over smoothing the dataset.

In some implementations, the histogram of each known valid identification is normalized to provide a normalized histogram. A histogram can be normalized based on the following example relationship:

$$100(w_{bin})\left(\frac{f_i}{\sum f}\right)$$

where $w_{bin}$ is the bin width (e.g., 4), $f_i$ is the frequency for the $i^{th}$ bin, $1 \leq i \leq n$ ($n$ is the number of bins in the histogram), and $\sum f$ is the sum of the frequencies across all bins in the histogram.

In some implementations, a model brightness histogram is provided based on the histograms of the known valid identifications. In some examples, the model brightness histogram is provided as an average of the histograms of the known valid identifications. For example, an average value is determined for each bin from the normalized histograms, and the model brightness histogram is provided as a plot of the average values across all bins. In this manner, the model brightness histogram can be provided as the arithmetic mean ($\overline{X}$) of the normalized histograms of the known valid identifications.

For example, the following table can be considered, which includes example brightness values for a first example known valid identification ($S_1$) and a second example know valid identification ($S_2$). Although two example known valid identifications are provided, it is contemplated that the model brightness histogram can be provided using any appropriate number of known valid identifications (e.g., tens, hundreds, thousands).

Table 2: Example Expected Brightness Values for Model Brightness Histogram

| Bin | $S_1$ | $S_2$ | $f_E$ |
|---|---|---|---|
| 1 | 0.256862989 | 9.818523261 | 5.037693125 |
| 2 | 2.22792043 | 8.931797611 | 5.579859021 |
| 3 | 4.922098202 | 10.65665502 | 7.789376612 |
| 4 | 5.786737175 | 9.749619232 | 7.768178203 |
| 5 | 5.725959576 | 8.570201903 | 7.14808074 |
| 6 | 5.639007684 | 8.14474209 | 6.891874887 |
| ... | ... | ... | ... |
| 64 | 72.76453782 | 64.82688145 | 68.79570964 |

In the example of Table 2, an expected frequency ($V_E$) is determined as the average of respective values of each of the samples.

In some implementations, tampering of the target identification (also referred to herein as a presentation attack) is determined by comparing an ID value of the target identification to a critical value. In some examples, a brightness histogram (brightness fingerprint) is generated for the target identification based on the UV image of the target identification. For example, occurrences of brightness values are included in respective bins to generate a brightness histogram, as described herein. In this manner, for each bin of the brightness histogram a respective observed frequency is provided.

In some examples, the ID value can be provided as a statistical value determined based on observed frequencies provided in the brightness histogram (i.e., determined from the UV image of the target identification) and the expected frequencies of the model brightness histogram. An example statistical value includes, without limitation a chi-squared statistic ($X^2$), which can be calculated using the following example relationship:

$$X^2 = \sum_{i=1}^{n} \frac{(f_{O_i} - f_{E_i})^2}{f_{E_i}}$$

where $f_{O_i}$ is the frequency of the $i^{th}$ bin of the brightness histogram of the target identification (e.g., observed frequency) and $f_{E_i}$ is the frequency value of the $i^{th}$ bin of the model brightness histogram (e.g., expected frequency), and $1 \le i \le n$ ($n$ is the number of bins in each of the histograms (e.g., $n$ = 64)).

In some implementations, the critical value is determined based on the model brightness histogram. In some examples, a number of degrees-of-freedom (k) of the model brightness histogram is determined as the number of bins minus 1. Using the example above, the number of degrees-of-freedom can be calculated as $k$ = 63 (e.g., 64 bins - 1). In some examples, a significance value, also referred to as an alpha value ($\alpha$), is selected. The alpha value can influence occurrences of false positives (e.g., incorrectly detecting tampering) and occurrences of false negatives (e.g., incorrectly detecting no tampering). In some examples, the alpha value can be adjusted based on empirical performance during testing using known valid identifications and known invalid identifications.

In some examples, the critical value is determined based on the number of degrees-of-freedom and the alpha value. For example, the critical value can be determined from an engineering table using the number of degrees-of-freedom and the alpha value as indices to the engineering table. An example engineering table includes, without limitation, a $X^2$ Distribution Table. An example portion of an example table is provided below as Table 2.

Table 2: Example Portion of $X^2$ Distribution Table

| $k / \alpha$ | 0.99 | 0.95 | ... | 0.75 | 0.5 | 0.25 | 0.1 | 0.05 | ... | 0.005 | 0.001 |
|---|---|---|---|---|---|---|---|---|---|---|---|
| ... | ... | ... | ... | ... | ... | ... | ... | ... | ... | ... | ... |
| 63 | 39.855 | 45.741 | ... | 55.110 | 62.335 | 70.165 | 77.745 | 82.529 | ... | 95.649 | 103.442 |
| ... | ... | ... | ... | ... | ... | ... | ... | ... | ... | ... | ... |

Using the example of $k$ = 63 and $\alpha$ = 0.05 (5%), the critical value is determined to be 82.529.

In accordance with implementations of the present disclosure, if the ID value ($X^2$) exceeds the critical value, tampering is detected. If the ID value does not exceed the critical value, tampering is not detected. This can be represented as follows:

$X^2 > CriticalValue \rightarrow 1$ (tampering)

$X^2 \le CriticalValue \rightarrow 0$ (no tampering)

In some implementations, whether an identification is valid can be determined based on the tampering indication or non-tampering indication alone. For example, if a target identification is evaluated and the indication is tampering (e.g., 1), the target identification can be rejected as invalid (e.g., goods and/or services are denied). As another example, if a target identification is evaluated and the indication is no tampering (e.g., 0), the target identification can be accepted as valid (e.g., goods and/or services are provided).

In some implementations, whether an identification is valid can be determined based on a set of indicators. In some examples, the set of indicators includes the tampering / non-tampering indicator of the present disclosure. In some examples, although one or more indicators in the set of indicators indicate that the target identification is invalid, the target identification can still be determined to be valid. Likewise, although one or more indicators in the set of indicators indicate that the target identification is valid, the target identification can still be determined to be invalid. Accordingly, the tampering indicator of the present disclosure can be one of a plurality of considerations in ultimately determining whether a target identification is valid.

In some implementations, and as introduced above, each model brightness fingerprint (e.g., model brightness histogram) is specific to a particular type of identification. In some examples, each model brightness fingerprint is specific to a particular type of identification and the specific scanner used to generate the UV images of identifications. In some examples, the scanner includes one or more UV lights and one or more cameras. In this manner, each model brightness fingerprint accounts for any variations that the respective scanner might introduce in terms of emitting UV light and generating the UV images, as compared to other scanners.

In some implementations, when a scanner is first deployed for production use (e.g., in an autonomous system, such as a vending machine), no model brightness fingerprint is provided. In some examples, the model brightness fingerprint for each type of identification is constructed over time, through production use. For example, each time a target identification of a particular type is determined to be valid, the brightness histogram is added to a model brightness fingerprint for the particular type. After a threshold number of valid target identifications have been processed for the particular type, the respective brightness fingerprints are used to generate the model brightness fingerprint for the particular type. In this manner, the model brightness fingerprint is specific to the scanner (e.g., UV light source(s), camera(s)) used to scan the target identifications.

By way of non-limiting, a scanner can be put into production use. A first target identification is presented to the scanner, which scans the first target identification to generate a first UV image, and first brightness fingerprint. It is determined that a model brightness fingerprint is not available. Consequently, whether the first target identification has been tampered with can be determined by comparing a value of a particular region of the first target identification (e.g., region mean brightness value) to a value of the first target identification (e.g., ID mean brightness value), as described in detail herein. The first target identification can be determined to be valid. Consequently, the first brightness fingerprint is provided for use to generate a brightness fingerprint model for the type of the first identification.

Continuing, a second target identification is presented to the scanner, which scans the second target identification to generate a second UV image, and second brightness fingerprint. The second target identification is of the same type as the first target identification. It is determined that a model brightness fingerprint is not available. Consequently, whether the second target identification has been tampered with can be determined by comparing a value of a particular region of the second target identification (e.g., region mean brightness value) to a value of the second target identification (e.g., ID mean brightness value), as described in detail herein. The second target identification can be determined to be invalid. Consequently, the second brightness fingerprint is not provided for use to generate a brightness fingerprint model for the type of the second identification.

Continuing, a third target identification is presented to the scanner, which scans the third target identification to generate a third UV image, and third brightness fingerprint. The third target identification is of the same type as the first and second target identifications. It is determined that a model brightness fingerprint is not available. Consequently, whether the third target identification has been tampered with can be determined by comparing a value of a particular region of the third target identification (e.g., region mean brightness value) to a value of the third target identification (e.g., ID mean brightness value), as described in detail herein. The third target identification can be determined to be valid. Consequently, the third brightness fingerprint is provided for use to generate a brightness fingerprint model for the type of the third identification.

In this example, it can be determined that a brightness fingerprint model can be generated using the first brightness fingerprint and the third brightness fingerprint. Consequently, a model brightness fingerprint is generated as described in detail herein.

Continuing, a fourth target identification is presented to the scanner, which scans the fourth target identification to generate a fourth UV image, and fourth brightness fingerprint. The fourth target identification is of the same type as the first, second, and third target identifications. It is determined that a model brightness fingerprint is available. Consequently, whether the fourth target identification has been tampered with can be indicated by determining the value ($X^2$) for the fourth target identification and comparing the value to the critical value, as described in detail herein. The fourth target identification can be determined to be valid. Consequently, the fourth brightness fingerprint is provided for use to refine the brightness fingerprint model for the type.

In some implementations, none of the images, whether UV images or otherwise, are persisted in memory. Instead, and with respect to the UV images, for each target identification, only the brightness values of the pixels determined from the UV image are stored. Because only the brightness values are stored, the UV images cannot be recreated. In this manner, data privacy of individuals presenting target identifications is preserved.

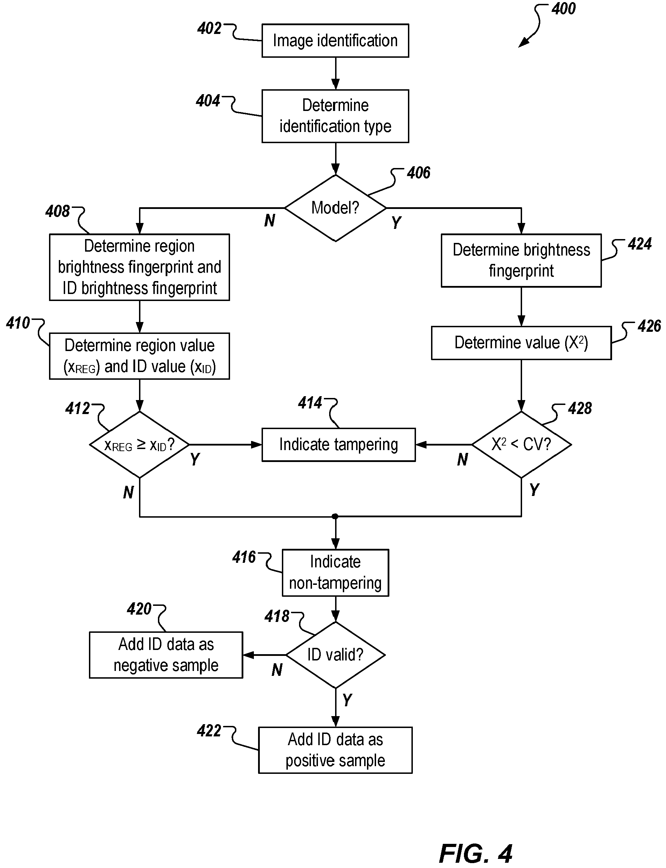

FIG. 4 depicts an example process 400 that can be executed in implementations of the present disclosure. In some examples, the example process 400 is provided using one or more computer-executable programs executed by one or more computing devices.

A target identification is imaged (402). For example, a UV image of an identification is generated, as described herein. In some examples, an image (non-UV) of the identification is also generated. An identification type is determined (404). For example, and as described herein, a type data set for the target identification can be determined by processing an image of the target identification. For example, the image can be processed using optical character recognition (OCR) to recognize text displayed on the target identification. Example text can include type of identification (e.g., driving license, passport), issuing authority, and date issued. It is determined whether a model brightness fingerprint is available for the target identification (406). For example, and as described herein, the type of identification can be used to index a table. If a model brightness fingerprint for the type of identification is included in the table, it can be determined that a model brightness fingerprint is available. If a model brightness fingerprint for the type of identification is not included in the table, it can be determined that a model brightness fingerprint is available.

If it is determined that a model brightness fingerprint is not available for the target identification, a region brightness value and an identification brightness value are determined (408) and a region value and an identification value are determined (410). For example, and as described herein, the particular region includes a photo region (e.g., a portion of the target identification that includes an image of the person purportedly represented by the target identification). In some examples, the values are each provided as a mean brightness value. That is, the region value is determined as a region mean brightness value across all pixels in the particular region of the UV image, and the ID value is determined as an ID mean brightness value across all pixels of the UV image.

It is determined whether the region value is greater than or equal to the identification value (412). If the region value is greater than or equal to the identification value, tampering is indicated (414). For example, the user presenting the identification can be rejected for provisioning of goods and/or services. If the region value is less than the identification value, non-tampering is indicated (416). It is determined whether the target identification is not valid (418). If the target identification is valid, data of the target identification can be added as a negative sample (420). If the target identification is valid, data of the target identification can be added as a positive sample (420).

If it is determined that a model brightness fingerprint is available for the target identification, a brightness fingerprint for the target identification is determined (424) and a value for the target identification is determined (426). For example, and as described herein, a brightness histogram (brightness fingerprint) is generated for the target identification based on the UV image of the target identification, and the value can be provided as a statistical value determined based on observed frequencies provided in the brightness histogram (i.e., determined from the UV image of the target identification) and the expected frequencies of the model brightness histogram. An example statistical value includes, without limitation a chi-squared statistic ($X^2$). It is determined whether the value is less than a critical value (CV) (428). For example, and as described herein, the critical value is determined based on the model brightness histogram. If the value is not less than the critical value, tampering is indicated (414). If the value is less or equal to the critical value, non-tampering is indicated (414).

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

**1.** A computer-implemented method for determining whether an identification has been tampered with, the method comprising:

applying ultra-violet (UV) light to a first target identification;
generating a first UV image of the first target identification; and
determining that a model brightness fingerprint is unavailable for the first target identification, and in response:

calculating a region brightness value for a particular region of the first target identification based on the first UV image,
calculating an identification brightness value for the first target identification based on the first UV image, and
comparing the region brightness value to the identification brightness value to determine whether the first target identification has been tampered with.

**2.** The method of claim 1, further comprising:

generating a brightness fingerprint for the first target identification based on the first UV image; and
providing the model brightness fingerprint at least partially based on the brightness fingerprint.

**3.** The method of claim 1 or 2, wherein the particular region comprises a photo region comprising an image provided in the first target identification.

4. The method of any of the preceding claims, wherein determining that a model brightness fingerprint is unavailable for the first target identification comprises:

   determining an identification type of the first target identification;
   indexing a table of model brightness fingerprints using the identification type; and
   determining that the table is absent the identification type.

5. The method of any of the preceding claims, further comprising determining that the first target identification has been tampered with in response to the region brightness value being greater than or equal to the identification brightness value.

6. The method of any of the preceding claims, further comprising determining that the first target identification has not been tampered with in response to the region brightness value being less than the identification brightness value.

7. The method of any of the preceding claims, wherein the region brightness value is calculated as a mean brightness value across all pixels in the particular region depicted within the first UV image.

8. The method of any of the preceding claims, further comprising:

   applying UV light to a second target identification;
   generating a second UV image of the second target identification; and
   determining that the model brightness fingerprint is available for the second target identification, and in response:

      generating a brightness fingerprint for the second target identification,
      determining a value for the second target identification based on the brightness fingerprint and the model brightness fingerprint, and
      comparing the value to a threshold value to determine whether the second target identification has been tampered with.

9. The method of any of the preceding claims, wherein the brightness fingerprint comprises a brightness histogram of the second target identification based on the second UV image of the second target identification.

10. The method of any of the preceding claims, wherein the model brightness fingerprint is provided as a histogram of brightness values of a set of UV images of a set of known valid identifications.

11. A system, comprising:

   a scanner; and
   a computer-readable storage device coupled to the one or more processors and having instructions stored thereon which, when executed by the one or more processors, cause the one or more processors to perform operations for determining whether an identification has been tampered with, the operations comprising:

      applying ultra-violet (UV) light to a first target identification;
      generating a first UV image of the first target identification; and
      determining that a model brightness fingerprint is unavailable for the first target identification, and in response:

         calculating a region brightness value for a particular region of the first target identification based on the first UV image,
         calculating an identification brightness value for the first target identification based on the first UV image, and
         comparing the region brightness value to the identification brightness value to determine whether the first target identification has been tampered with.

12. The system of claim 11, wherein the instructions, when executed by the one or more processors, cause the one or more processors to perform the method of one or more of claims 2 to 10.

**13.** Computer program instructions that, when executed by one or more processors, cause the one or more processors to perform operations for determining whether an identification has been tampered with, the operations comprising:

applying ultra-violet (UV) light to a first target identification;
generating a first UV image of the first target identification; and
determining that a model brightness fingerprint is unavailable for the first target identification, and in response:

calculating a region brightness value for a particular region of the first target identification based on the first UV image,
calculating an identification brightness value for the first target identification based on the first UV image, and
comparing the region brightness value to the identification brightness value to determine whether the first target identification has been tampered with.

**14.** The computer program instructions of claim 13, wherein the computer program instructions, when executed by the one or more processors, cause the one or more processors to perform the method of one or more of claims 2 to 10.

100
DRIVING LICENSE
ENHANCED
ID: 123 456 789
Class: M,C
McDrivalot,
Drivey
123 Main St.
Anytown, USA 12345
DOB: 1973-08-08
Sex: M
DMcDrivalot
102
100'
104

FIG. 1A

FIG. 1B

202
100'
204
104
SEAL OF THE STATE
DRIVING LICENSE
202
100
204
102

FIG. 2B

FIG. 2A

300
80
70
60
50
40
30
20
10
0
4
64
128
196
256
Brightness Value
Model Brightness Fingerprint
Brightness Fingerprint (known valid ID1)
Brightness Fingerprint (known valid ID2)
Brightness Fingerprint (tampered ID)

FIG. 3

400
402
Image identification
404
Determine identification type
406
Model?
N
Y
408
Determine region brightness fingerprint and ID brightness fingerprint
410
Determine region value ($x_{REG}$) and ID value ($x_{ID}$)
412
$x_{REG} \geq x_{ID}$?
Y
N
414
Indicate tampering
424
Determine brightness fingerprint
426
Determine value ($X^2$)
428
$X^2 < CV$?
N
Y
416
Indicate non-tampering
418
ID valid?
N
Y
420
Add ID data as negative sample
422
Add ID data as positive sample

FIG. 4

Europäisches Patentamt
European Patent Office
Office européen des brevets

# EUROPEAN SEARCH REPORT

Application Number
EP 21 15 7867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 417 429 A1 (CHECKPRINT LTD [GB]) 26 December 2018 (2018-12-26) * page 7 line 32 to page 9 line 6 * ----- | 1-14 | INV. G07D7/00 G06K9/00 G06K9/34 G06K9/62 |
| A | US 2017/277945 A1 (BUDIHAL RAMACHANDRA [IN] ET AL) 28 September 2017 (2017-09-28) * paragraphs 28-33 * ----- | 1-14 | |

TECHNICAL FIELDS SEARCHED (IPC)
G06K
G07D

The present search report has been drawn up for all claims

1

| Place of search | Date of completion of the search | Examiner |
|---|---|---|
| The Hague | 9 July 2021 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 7867

This annex lists the patent family members relating to the patent documents cited in the above-mentioned European search report. The members are as contained in the European Patent Office EDP file on The European Patent Office is in no way liable for these particulars which are merely given for the purpose of information.

09-07-2021

| Patent document cited in search report | Publication date | Patent family member(s) | Publication date |
|---|---|---|---|
| EP 3417429 A1 | 26-12-2018 | EP 3417429 A1 | 26-12-2018 |
| | | GB 2548546 A | 27-09-2017 |
| | | WO 2017141006 A1 | 24-08-2017 |
| US 2017277945 A1 | 28-09-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62979605